# EUROPEAN PATENT APPLICATION

(11) **EP 4 838 666 A1**
(43) Date of publication of application: **11.11.2026**
(21) Application number: 24923359.4
(22) Date of filing: 09.10.2024
(51) Int. Cl.: H01M 50/342, H01M 50/30, H01M 50/383

(54) **BATTERY CELL, BATTERY, AND ELECTRICAL DEVICE**

(30) Priority: 05.02.2024 CN 202420281933 U
(71) Applicant: Contemporary Amperex Technology Co., Limited, Ningde, Fujian 352100 (CN); Contemporary Amperex Technology (Hong Kong) Limited, Central, Hong Kong (HK)
(72) Inventor: WU, Kai, Ningde, Fujian 352100 (CN); QUAN, Chao, Ningde, Fujian 352100 (CN); LI, Yao, Ningde, Fujian 352100 (CN); LI, Wei, Ningde, Fujian 352100 (CN)
(74) Representative: Kraus & Lederer PartGmbB
(86) International application number: PCT/CN2024/123696
(87) International publication number: WO 2025/167155

(57) **Abstract**

A battery cell (6), a battery (2), and an electrical device. The battery cell (6) comprises an electrode assembly (10), a casing (20), a pressure relief mechanism (40), and a protective member (50). The electrode assembly (10) is accommodated in the casing (20). The casing (20) comprises a wall portion. The pressure relief mechanism (40) is arranged on the wall portion. In the thickness direction of the wall portion, at least part of the protective member (50) is provided between the pressure relief mechanism (40) and the electrode assembly (10). When a high-temperature substance outside the battery cell (6) acts on the pressure relief mechanism (40) and melts through the pressure relief mechanism (40), the protective member (50) can bear the thermal shock of the high-temperature substance and separate at least part of the high-temperature substance from the electrode assembly (10), so that the risk of conduction of a positive electrode and a negative electrode of the electrode assembly (10) by the high-temperature substance is reduced, thereby improving the reliability of the battery cell (6).

## Description

### CROSS-REFERENCE TO RELATED APPLICATIONS

This application claims priority to the Chinese Patent Application No. 202420281933.1 filed on February 5, 2024 and entitled "BATTERY CELL, BATTERY, AND ELECTRIC APPARATUS", which is incorporated herein by reference in its entirety.

### TECHNICAL FIELD

This application relates to the field of batteries, in particular to a battery cell, a battery, and an electric apparatus.

### BACKGROUND

With the development of battery technologies, battery cells are applied in more and more fields and gradually replace traditional petrochemical energy in the field of automotive power. Battery cells can store chemical energy and controllably convert the chemical energy into electrical energy. Recyclable battery cells can continue to be used by activating active materials by charging after discharge.

How to improve the reliability of battery cells is an important research direction in the industry.

### SUMMARY

This application provides a battery cell, a battery, and an electric apparatus, which can improve reliability.

According to a first aspect, this application provides a battery cell, which includes an electrode assembly, a housing, a pressure relief mechanism, and a protective member. The electrode assembly is accommodated in the housing. The housing includes a wall portion. The pressure relief mechanism is arranged on the wall portion. In a thickness direction of the wall portion, at least part of the protective member is arranged between the pressure relief mechanism and the electrode assembly.

When thermal runaway occurs in the battery cell, an internal pressure of the battery cell can be transmitted to the pressure relief mechanism through the protective member, so that the pressure relief mechanism actuates in a timely manner. The pressure relief mechanism actuates and releases a substance inside the housing outward to reduce the risk of explosion and fire of the battery cell, thereby improving the reliability of the battery cell. When a high-temperature substance outside the battery cell acts on the pressure relief mechanism and melts through the pressure relief mechanism, the protective member can withstand thermal shock of the high-temperature substance and separate at least part of the high-temperature substance from the electrode assembly, reducing the risk of conduction of positive and negative electrodes of the electrode assembly caused by the high-temperature substance, thereby improving the reliability of the battery cell.

In the above one or more optional embodiments, the pressure relief mechanism includes a weakened portion and a pressure relief portion surrounded by the weakened portion. In the thickness direction, a projection of the pressure relief portion is located within a projection of the protective member, and a projection of the weakened portion is located within the projection of the protective member.

The protective member can shield the weakened portion and the pressure relief portion from an inner side. Even if the weakened portion or the pressure relief portion is melted through by a high-temperature substance, the protective member can separate the high-temperature substance from the electrode assembly.

In the above one or more optional embodiments, the wall portion is provided with a pressure relief hole, the pressure relief hole extends through the wall portion along the thickness direction, and the pressure relief mechanism is connected to the wall portion and covers the pressure relief hole. In the thickness direction, a projection of the pressure relief hole is located within the projection of the protective member. The protective member can shield the pressure relief hole from the inner side and separate, to some extent, a high-temperature substance passing through the pressure relief hole from the electrode assembly, reducing the risk of short circuit, thereby improving the reliability of the battery cell.

In the above one or more optional embodiments, in the thickness direction, a projection of the pressure relief mechanism is located within the projection of the protective member, reducing the risk of short circuit, thereby improving the reliability of the battery cell.

In the above one or more optional embodiments, the protective member includes a first region and a second region surrounding the first region, and the first region and the pressure relief mechanism entirely overlap in the thickness direction. A width W of the second region is 0.5 mm to 10 mm.

Defining W to be greater than or equal to 0.5 mm can reduce the risk that the protective member does not cover the entire pressure relief mechanism due to assembly errors. Defining W to be less than or equal to 10 mm can reduce the resistance of the protective member coming out of the housing when the pressure relief mechanism actuates, and reduce the blocking of the protective member on an internal substance, thereby improving the pressure relief efficiency.

In the above one or more optional embodiments, a thickness of the protective member is greater than a thickness of the pressure relief mechanism to reduce the risk of the protective member being melted through by a high-temperature substance, thereby improving the reliability of the battery cell.

In the above one or more optional embodiments, the thickness of the protective member is 0.4 mm to 2 mm; and optionally, the thickness of the protective member is 0.5 mm to 1.5 mm.

Defining the thickness of the protective member to be greater than or equal to 0.4 mm can reduce the risk of the protective member being melted through by a high-temperature substance, thereby improving the reliability of the battery cell. Defining the thickness of the protective member to be less than or equal to 2 mm can reduce the difficulty of deformation of the protective member when the pressure relief mechanism actuates, so that the protective member can come out of the housing in a timely manner, reducing the blocking of the protective member on an internal substance, thereby improving the pressure relief efficiency.

In the above one or more optional embodiments, a melting point of the protective member is greater than or equal to 250°C; and optionally, the melting point of the protective member is greater than or equal to 300°C.

The melting point of the protective member is greater than or equal to 250°C, so that the protective member can withstand high thermal shock. Under a condition that a high-temperature substance melts through the pressure relief mechanism and comes into contact with the protective member, the protective member can withstand thermal shock of the high-temperature substance and is not prone to problems such as deformation and melting through under a high temperature, so that at least part of the high-temperature substance is separated from the electrode assembly, thereby reducing the risk of short circuit.

In the above one or more optional embodiments, an elastic modulus of the protective member is less than or equal to 4500 MPa; and optionally, the elastic modulus of the protective member is less than or equal to 4000 MPa.

The elastic modulus of the protective member is small. When thermal runaway occurs in the battery cell, the protective member can be in close contact with the pressure relief mechanism under an internal pressure of the battery cell, to transmit the internal pressure of the battery cell to the pressure relief mechanism, enabling the pressure relief mechanism to actuate in a timely manner. When the pressure relief mechanism actuates, the protective member may alternatively deform and come out of the housing, reducing the blocking of the protective member on an internal substance, thereby improving the pressure relief efficiency.

In the above one or more optional embodiments, the protective member is made of polyimide or polyethylene terephthalate. These materials have high melting points and are less likely to be melted through. In addition, these materials are less likely to be corroded by electrolytes.

In the above one or more optional embodiments, the battery cell further includes an insulating member, the insulating member is arranged between the wall portion and the electrode assembly, and the insulating member is connected to the wall portion and abuts against the electrode assembly.

The insulating member can separate the electrode assembly from the wall portion to reduce the risk of conduction of the positive and negative electrodes of the electrode assembly caused by the wall portion, thereby improving the reliability of the battery cell. When the battery cell is subjected to external impact, the insulating member can restrict the shaking of the electrode assembly within the housing, reducing the risk of connection failure between the electrode assembly and other components, thereby improving the reliability of the battery cell.

In the above one or more optional embodiments, in the thickness direction, the protective member is arranged between the insulating member and the pressure relief mechanism, and the insulating member can provide support for the protective member.

In the above one or more optional embodiments, the protective member is connected to the insulating member. The insulating member can limit the protective member to reduce the risk of deviation of the protective member within the housing, so that the protective member can cover the pressure relief mechanism from the inner side and shield a high-temperature substance that melts through the pressure relief mechanism.

In the above one or more optional embodiments, a side of the insulating member facing the wall portion is provided with a recess. At least part of the protective member is accommodated in the recess. By providing the recess, the insulating member and the protective member can share space in the thickness direction, thereby increasing the space utilization rate. During assembly of the insulating member and the protective member, the recess can position the protective member, thereby simplifying the assembly process.

In the above one or more optional embodiments, the protective member is entirely accommodated in the recess. In the thickness direction, the protective member does not protrude from a surface of the insulating member facing the wall portion, thereby reducing the risk that the protective member interferes with the close contact between the insulating member and the wall portion.

In the above one or more optional embodiments, a side wall of the recess has a step surface, and the protective member abuts against and is connected to the step surface.

The step surface can support the protective member and separate a bottom wall of the recess from the protective member, to form a heat insulation cavity between the bottom wall of the recess and the protective member, and the heat insulation cavity can reduce heat transferred to the bottom wall of the recess, so that heat transferred to the electrode assembly is reduced, thereby reducing the risk of short circuit of the electrode assembly. The provision of the step surface can reduce a connection area between the protective member and the insulating member, thereby reducing the difficulty of separating the protective member from the insulating member when thermal runaway occurs in the battery cell.

In the above one or more optional embodiments, the insulating member is provided with a through hole, and the through hole is located on a side of the protective member facing away from the pressure relief mechanism.

The through hole is in communication with space between the insulating member and the electrode assembly. When thermal runaway occurs in the battery cell, a substance generated by the electrode assembly can act on the protective member through the through hole and apply a pressure to the pressure relief mechanism through the protective member, so that the pressure relief mechanism actuates in a timely manner and forms a pressure relief channel. The substance generated by the electrode assembly can be quickly discharged to the outside of the battery cell through the through hole and the pressure relief channel.

In the above one or more optional embodiments, the melting point of the protective member is greater than a melting point of the insulating member. The protective member has a high melting point. Under a condition that a high-temperature substance melts through the pressure relief mechanism, the protective member can withstand thermal shock of the high-temperature substance and is less likely to be melted through, so that at least part of the high-temperature substance is separated from the electrode assembly, thereby reducing the risk of short circuit.

In the above one or more optional embodiments, a specific heat capacity of the insulating member is greater than or equal to 1600 J/(kg×°C); and optionally, the specific heat capacity of the insulating member is greater than or equal to 2000 J/(kg×°C). The insulating member has a high specific heat capacity and therefore can absorb a large amount of heat. When an external high-temperature substance melts through the pressure relief mechanism and is attached to the protective member, the insulating member can absorb heat of the high-temperature substance through the protective member, reducing a temperature rise of the protective member, and reducing the risk of the protective member being melted through, thereby improving the reliability of the battery cell.

In the above one or more optional embodiments, the insulating member includes an insulating substrate and a coating arranged on a surface of the insulating substrate, and a specific heat capacity of the coating is greater than a specific heat capacity of the insulating substrate. In the thickness direction, a projection of the coating and the projection of the pressure relief mechanism at least partially overlap. The coating and the protective member can provide double-layer protection. After the pressure relief mechanism is melted through by an external high-temperature substance, even if the high-temperature substance falls onto the coating, the coating can quickly absorb heat, and the coating has a high specific heat capacity, so that the coating has a small temperature rise and therefore is less likely to be melted through.

In the above one or more optional embodiments, the protective member is connected to the coating. Under a condition that an external high-temperature substance falls onto the protective member, the coating can absorb heat of the protective member, reducing a temperature rise of the protective member, thereby reducing the risk of the protective member being melted through.

In the above one or more optional embodiments, a melting point of the coating is greater than the melting point of the insulating substrate. The coating has a higher melting point and is less likely to be melted through, so that a high-temperature substance is separated from the electrode assembly, thereby improving the reliability.

According to a second aspect, this application provides a battery, which includes a plurality of battery cells provided by any embodiment according to the first aspect.

According to a third aspect, this application provides an electric apparatus, which includes the battery provided by any embodiment according to the second aspect, where the battery is configured to provide electrical energy.

### BRIEF DESCRIPTION OF DRAWINGS

The features, advantages, and technical effects of exemplary embodiments of this application are described below with reference to the drawings.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic diagram of a partial structure of a battery cell according to some embodiments of this application;
FIG. 5 is a schematic cross-sectional view of a battery cell according to some embodiments of this application;
FIG. 6 is a schematic enlarged view of FIG. 5 at a circled position;
FIG. 7 is a schematic enlarged view of FIG. 6 at a circled position;
FIG. 8 is a schematic structural diagram of a protective member of a battery cell according to some embodiments of this application;
FIG. 9 is a schematic partial cross-sectional view of a battery cell according to some other embodiments of this application; and
FIG. 10 is a schematic partial cross-sectional view of a battery cell according to still some other embodiments of this application.

In the drawings, the figures are not necessarily drawn to actual scale.

### DESCRIPTION OF EMBODIMENTS

To make the objectives, technical solutions, and advantages of the embodiments of this application clearer, the technical solutions in the embodiments of this application are clearly described below in conjunction with the drawings in the embodiments of this application. Obviously, the described embodiments are some embodiments rather than all embodiments of this application. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field to which this application belongs. The terms used in the description of this application are only for the purpose of describing specific embodiments and are not intended to limit this application. The terms "include", "comprise", "have", and any variations thereof in the specification and claims of this application and the above drawings are intended to cover non-exclusive inclusion. The terms "first", "second", and the like in the specification and claims of this application or the above drawings are used to distinguish different objects rather than to describe a specific order or primary-secondary relationship.

Reference to "embodiment" in this application means that a particular feature, structure, or characteristic described in conjunction with this embodiment may be included in at least one embodiment of this application. The appearance of the phrase in various positions in the specification does not necessarily refer to the same embodiment, nor is it an independent or alternative embodiment mutually exclusive with other embodiments.

In the description of this application, it should be noted that, unless otherwise clearly specified and limited, the terms "mounting", "connection", "join", and "attachment" should be understood in a broad sense, for example, it may be a fixed connection, a detachable connection, or an integral connection; it may be a direct connection or an indirect connection through an intermediate medium; and it may be an internal communication between two elements. For those of ordinary skill in the art, the specific meanings of the above terms in this application can be understood according to specific circumstances.

The term "and/or" in this application is merely a description of an association relationship of associated objects, indicating that three relationships may exist. For example, A and/or B may mean: only A exists, both A and B exist, and only B exists. In addition, the character "/" in this application generally indicates that the contextually associated objects are in an "or" relationship.

In the embodiments of this application, the same reference numerals denote the same components, and for brevity, detailed descriptions of the same components are omitted in different embodiments. It should be understood that the thicknesses, lengths, widths, and other dimensions of various components in the embodiments of this application shown in the drawings, as well as the overall thickness, length, width, and other dimensions of an integrated apparatus, are merely illustrative and should not constitute any limitation on this application.

"A plurality of" appearing in this application refers to two or more (including two).

In the embodiments of this application, the battery cell may be a secondary battery cell. A secondary battery cell refers to a battery cell that can continue to be used by activating an active material through charging after discharge.

The battery cell may be a lithium-ion battery cell, a sodium-ion battery cell, a sodium-lithium-ion battery cell, a lithium-metal battery cell, a sodium-metal battery cell, a lithium-sulfur battery cell, a magnesium-ion battery cell, a nickel-metal hydride battery cell, a nickel-cadmium battery cell, a lead-acid battery cell, or the like. The embodiments of this application are not limited thereto.

A battery cell generally includes an electrode assembly. The electrode assembly includes a positive electrode and a negative electrode.

During charging and discharging of the battery cell, active ions (such as lithium ions) are intercalated and deintercalated back and forth between the positive electrode and the negative electrode. A separator is arranged between the positive electrode and the negative electrode, which can prevent short circuit between the positive and negative electrodes as well as allow active ions to pass through.

In some embodiments, the positive electrode may be a positive electrode sheet, and the positive electrode sheet may include a positive electrode current collector and a positive electrode active material arranged on at least one surface of the positive electrode current collector.

In an example, the positive electrode current collector has two opposite surfaces in its thickness direction, and the positive electrode active material is arranged on either or both of the two opposite surfaces of the positive electrode current collector.

In an example, the positive electrode current collector may be a metal foil or a composite current collector. For example, as a metal foil, aluminum or stainless steel subjected to a surface treatment with silver, stainless steel, copper, aluminum, nickel, carbon electrode, carbon, nickel, titanium, or the like may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may alternatively be used. These positive electrode active materials may be used alone or two or more of them are used in combination. Examples of the lithium-containing phosphate may include but are not limited to at least one of lithium iron phosphate (such as LiFePO₄ (which may also be referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include but are not limited to at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (which may also be referred to as NCM333), LiNi_{0.5}Co_{0.2}Mn_{0.3}O₂ (which may also be referred to as NCM523), LiNi_{0.5}Co_{0.25}Mn_{0.25}O₂ (which may also be referred to as NCM211), LiNi_{0.6}Co_{0.2}Mn_{0.2}O₂ (which may also be referred to as NCM622), and LiNi_{0.8}Co_{0.1}Mn_{0.1}O₂ (which may also be referred to as NCM811)), lithium nickel cobalt aluminum oxide (such as LiNi_{0.80}Co_{0.15}Al_{0.05}O₂), and modified compounds thereof.

In some embodiments, the positive electrode may use foam metal or foam carbon. The foam metal may be foam nickel, foam copper, foam aluminum, foam alloy, or the like. When foam metal is used as the positive electrode, a surface of the foam metal may not be provided with a positive electrode active material, and certainly, may be provided with a positive electrode active material. In an example, a lithium source material, potassium metal, or sodium metal may alternatively fill into and/or deposit in the foam metal, where the lithium source material is lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or a composite current collector. For example, as a metal foil, aluminum or stainless steel subjected to a surface treatment with silver, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the negative electrode sheet may include a negative electrode current collector and a negative electrode active material arranged on at least one surface of the negative electrode current collector.

In an example, the negative electrode current collector has two opposite surfaces in its thickness direction, and the negative electrode active material is arranged on either or both of the two opposite surfaces of the negative electrode current collector.

In an example, the negative electrode active material may be a negative electrode active material for battery cells well known in the art. In an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, a silicon oxide compound, a silicon-carbon composite, a silicon-nitrogen composite, and silicon alloy. The tin-based material may be at least one selected from elemental tin, a tin oxide compound, and tin alloy. However, this application is not limited to these materials, and other conventional materials that can be used as negative electrode active materials for batteries may alternatively be used. These negative electrode active materials may be used alone or two or more of them are used in combination.

In some embodiments, the positive electrode current collector may be made of aluminum, and the negative electrode current collector may be made of copper.

In some embodiments, the electrode assembly further includes a separator, and the separator is arranged between the positive electrode and the negative electrode.

In some embodiments, the separator is a separating film. In this application, any well-known porous separating film with good chemical stability and mechanical stability may be used as the separating film.

In an example, a main material of the separating film may be at least one selected from glass fiber, non-woven fabric, polyethylene, polypropylene, polyvinylidene fluoride, and ceramic. The separating film may be a single-layer film or a multi-layer composite film. When the separating film is a multi-layer composite film, materials of the layers may be the same or different. The separator may be a separate component located between the positive and negative electrodes, or may be attached to surfaces of the positive and negative electrodes.

In some embodiments, the separator is a solid electrolyte. The solid electrolyte is arranged between the positive electrode and the negative electrode and simultaneously functions to transport ions and isolate the positive and negative electrodes.

In some embodiments, the battery cell further includes an electrolyte, and the electrolyte functions to conduct ions between the positive and negative electrodes. In this application, the electrolyte may be selected according to requirements. The electrolyte may be liquid, gel, or solid.

A liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. Ether solvents may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ethers.

A gel electrolyte includes a polymer serving as a skeleton network of the electrolyte, in combination with an ionic liquid-lithium salt.

A solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid electrolyte may be one or more of oxide solid electrolyte (crystalline perovskite, sodium superionic conductor, garnet, and amorphous LiPON film), sulfide solid electrolyte (crystalline lithium superionic conductor (lithium germanium phosphorus sulfide and argyrodite) and amorphous sulfide), halide solid electrolyte, nitride solid electrolyte, and hydride solid electrolyte.

In an example, the composite solid electrolyte is formed by adding inorganic solid electrolyte fillers to a polymer solid electrolyte.

In some embodiments, the electrode assembly has a wound structure. The positive electrode sheet and the negative electrode sheet are wound into a wound structure.

In some embodiments, the electrode assembly is a stacked structure.

In an example, a plurality of positive electrode sheets and a plurality of negative electrode sheets may be provided respectively, and the plurality of positive electrode sheets and the plurality of negative electrode sheets are alternately stacked.

In an example, a plurality of positive electrode sheets may be provided, the negative electrode sheet is folded to form a plurality of stacked folded segments, and one positive electrode sheet is sandwiched between adjacent folded segments.

In an example, the positive electrode sheet and the negative electrode sheet are each folded to form a plurality of stacked folded segments.

In an example, a plurality of separators may be provided, each of which is arranged between any adjacent positive electrode sheets or negative electrode sheets.

In an example, the separator may be provided continuously and arranged between any adjacent positive electrode sheets or negative electrode sheets by folding or winding.

In some embodiments, the electrode assembly may be in a cylindrical shape, a flat shape, a polygonal prism shape, or the like.

In some embodiments, the electrode assembly is provided with tabs, and the tabs can lead current out of the electrode assembly. The tabs include a positive tab and a negative tab.

In some embodiments, the battery cell may include a housing. The housing is configured to encapsulate the electrode assembly, the electrolyte, and other components. The housing may be a steel housing, an aluminum housing, a plastic housing (such as polypropylene), a composite metal housing (such as a copper-aluminum composite housing), an aluminum-plastic film, or the like.

In an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal-prism battery cell. The polygonal-prism battery cell is, for example, a hexagonal-prism battery cell.

The battery mentioned in the embodiments of this application refers to a single physical module including one or more battery cells to provide higher voltage and capacity.

In some embodiments, the battery may be a battery module. When there are a plurality of battery cells, the plurality of battery cells are arranged and fixed to form one battery module.

In some embodiments, the battery may be a battery pack. The battery pack includes a box and a battery cell, and the battery cell or battery module is accommodated in the box.

In some embodiments, the box may serve as part of a chassis structure of a vehicle. For example, part of the box may become at least part of the floor of the vehicle, or part of the box may become at least part of cross beams and longitudinal beams of the vehicle.

In some embodiments, the battery may be an energy storage apparatus. The energy storage apparatus includes an energy storage container, an energy storage cabinet, and the like.

For development of battery technologies, various design factors are to be considered at the same time, for example, performance parameters such as energy density, cycle life, discharge capacity, and charge-discharge rate. In addition, the reliability of the battery also needs to be considered.

The pressure relief mechanism on the battery cell has an important influence on the reliability of the battery cell. For example, when short circuit, overcharge, and other phenomena occur, thermal runaway may occur inside the battery cell, causing a sudden increase in pressure. Under this condition, the internal pressure can be released outward through actuation of the pressure relief mechanism, to reduce the risk of explosion and fire of the battery cell.

The pressure relief mechanism refers to an element or component that actuates to release internal gas when the internal pressure or temperature of the battery cell reaches a predetermined threshold. The threshold is designed differently according to different design requirements. The threshold may depend on a material of one or more of the positive electrode sheet, negative electrode sheet, electrolyte, and separator in the battery cell.

The pressure relief mechanism may take the form of an explosion-proof valve, an air valve, a pressure relief valve, a safety valve, or the like, and may specifically adopt a pressure-sensitive element or structure. To be specific, when the internal pressure of the battery cell reaches a predetermined threshold, the pressure relief mechanism performs an action or a weakened region arranged in the pressure relief mechanism is ruptured, to form an opening or channel for relieving the internal pressure. Alternatively, the pressure relief mechanism may alternatively adopt a temperature-sensitive element or structure. To be specific, when the internal temperature of the battery cell reaches a predetermined threshold, the pressure relief mechanism performs an action, to form an opening or channel for relieving the internal pressure.

"Actuate" mentioned in this application means that the pressure relief mechanism generates an action or is activated to a specific state, so that the internal pressure of the battery cell can be relieved. The action generated by the pressure relief mechanism may include but is not limited to: at least part of the pressure relief mechanism being ruptured, broken, torn, opened, or the like. When the pressure relief mechanism actuates, a high-temperature and high-pressure substance inside the battery cell is discharged outward from an actuating position as an emission. In this way, the pressure of the battery cell can be relieved under a pressure-controllable condition, thereby avoiding occurrence of more serious potential accidents.

The emission from the battery cell mentioned in this application includes but is not limited to: the electrolyte, dissolved or split positive and negative electrode sheets, fragments of the separator, high-temperature and high-pressure gas or flame generated in reaction, and the like.

A plurality of battery cells are usually arranged in a battery. When thermal runaway occurs in a battery cell, high-temperature substances (such as high-temperature gas, high-temperature particles, and the like) inside the battery cell are released after the pressure relief mechanism actuates; and the released high-temperature gas and particles rebound and impact an adjacent normal battery cell, thereby causing damage to the pressure relief mechanism of the adjacent battery cell. In severe cases, the pressure relief mechanism of a normal battery cell is melted through, and high-temperature particles enter the normal battery cell, causing short circuit and thermal runaway in the originally normal battery cell, thereby causing thermal propagation that affects the reliability of the battery.

In view of this, the embodiments of this application provide a technical solution, in which a protective member is arranged on an inner side of the pressure relief mechanism to separate an external high-temperature substance from the electrode assembly when the high-temperature substance melts through the pressure relief mechanism, reducing the risk of short circuit of the electrode assembly, thereby improving the reliability of the battery cell.

The battery cell described in the embodiments of this application is suitable for batteries and electric apparatuses using batteries.

The battery cell, battery, and electric apparatus disclosed in the embodiments of this application can be used in electric apparatuses that use batteries as power sources or in various energy storage systems that use batteries as energy storage elements. The electric apparatus may be, but is not limited to, mobile phones, tablets, laptop computers, electric toys, electric tools, electric bicycles, electric vehicles, ships, and space vehicles. Electric toys may include fixed or mobile electric toys, such as game consoles, electric toy cars, electric toy boats, and electric toy airplanes. Space vehicles may include airplanes, rockets, space shuttles, spacecraft, and the like.

For ease of description, the following embodiments are described by using an example in which the electric apparatus is a vehicle.

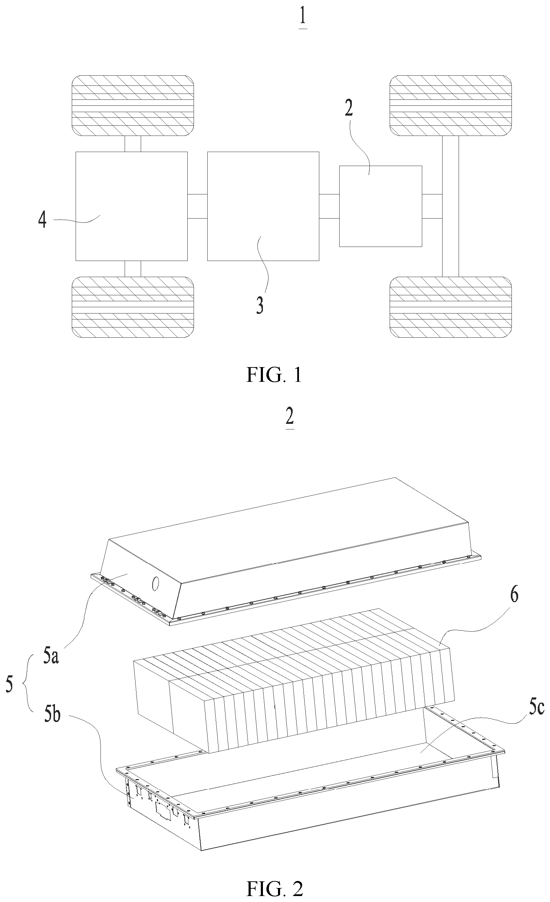

FIG. 1 is a schematic structural diagram of a vehicle according to some embodiments of this application.

As shown in FIG. 1, a battery 2 is arranged inside a vehicle 1, and the battery 2 may be arranged at the bottom, front, or rear of the vehicle 1. The battery 2 may be used to supply power to the vehicle 1. For example, the battery 2 may serve as an operating power source for the vehicle 1.

The vehicle 1 may further include a controller 3 and a motor 4. The controller 3 is configured to control the battery 2 to supply power to the motor 4, for example, to meet the operating power requirements for starting, navigating, and driving of the vehicle 1.

In some embodiments of this application, the battery 2 can serve not only as an operating power source for the vehicle 1 but also as a driving power source for the vehicle 1, replacing or partially replacing fuel oil or natural gas to provide driving power for the vehicle 1.

FIG. 2 is a schematic exploded view of a battery according to some embodiments of this application. As shown in FIG. 2, the battery 2 includes a box 5 and a battery cell 6, and the battery cell 6 is accommodated in the box 5.

The box 5 is configured to accommodate the battery cell 6, and the box 5 may be various structures. In some embodiments, the box 5 may include a first box portion 5a and a second box portion 5b. The first box portion 5a and the second box portion 5b cover each other, and the first box portion 5a and the second box portion 5b jointly define an accommodating space 5c for accommodating the battery cell 6. The second box portion 5b may be a hollow structure with one end open, the first box portion 5a may be a plate-like structure, and the first box portion 5a covers an open side of the second box portion 5b to form the box 5 having the accommodating space 5c. The first box portion 5a and the second box portion 5b may alternatively each be a hollow structure with one side open, and the open side of the first box portion 5a covers the open side of the second box portion 5b to form the box 5 having the accommodating space 5c. Certainly, the first box portion 5a and the second box portion 5b may have various shapes, such as a cylindrical shape and a rectangular shape.

To improve the sealing performance after the first box portion 5a and the second box portion 5b are connected, a sealing member, such as a sealant or a sealing ring may be arranged between the first box portion 5a and the second box portion 5b.

Assuming that the first box portion 5a covers a top of the second box portion 5b, the first box portion 5a may alternatively be referred to as an upper box cover, and the second box portion 5b may alternatively be referred to as a lower box portion.

In the battery 2, there may be one or more battery cells 6. If there are a plurality of battery cells 6, the plurality of battery cells 6 may be connected in series, in parallel, or in series-parallel. Being connected in series-parallel means that there are both a series connection and a parallel connection between the plurality of battery cells 6. The plurality of battery cells 6 may be directly connected in series, in parallel, or in series-parallel, and then an entirety formed by the plurality of battery cells 6 is accommodated in the box 5. Certainly, the plurality of battery cells 6 may first be connected in series, in parallel, or in series-parallel to form a battery module, and then a plurality of battery modules are connected in series, in parallel, or in series-parallel to form an entirety that is accommodated in the box 5.

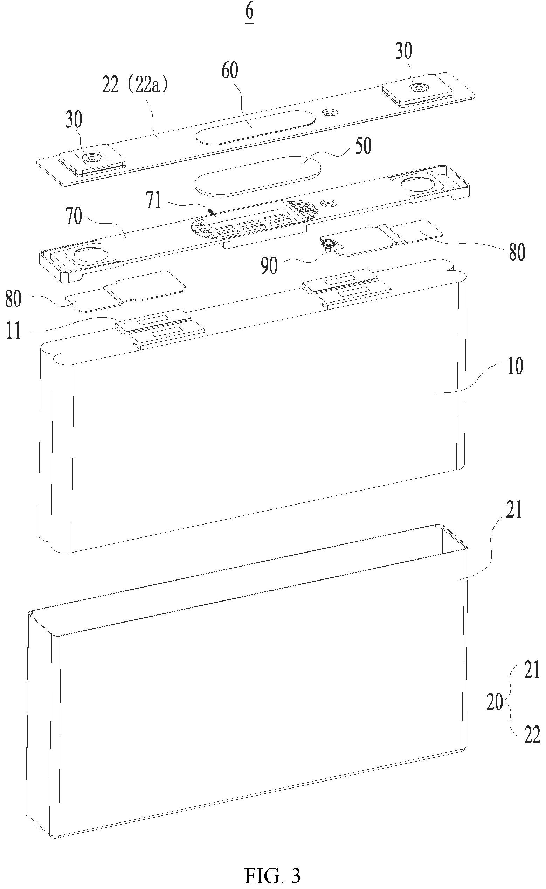

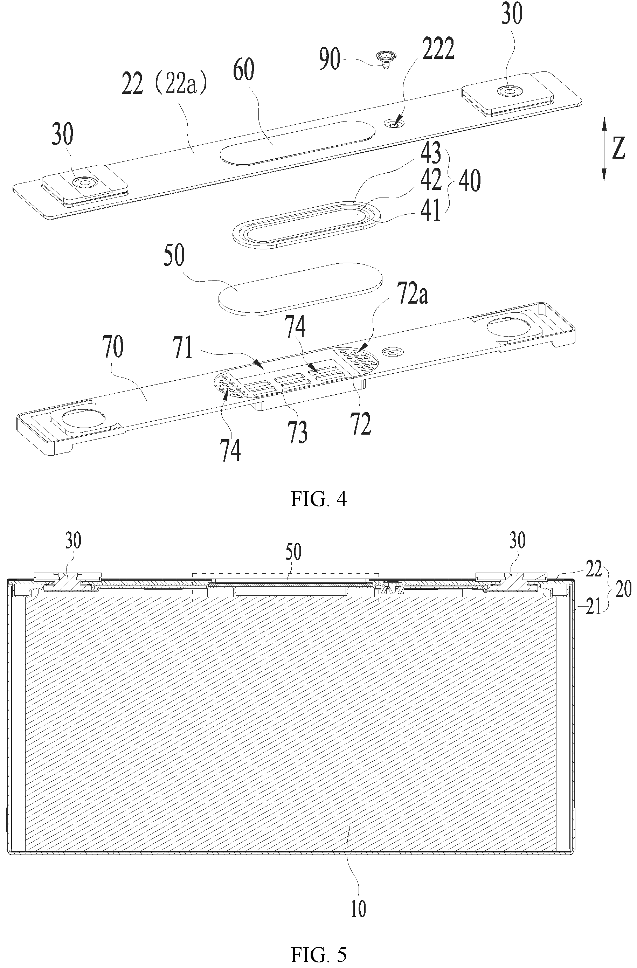

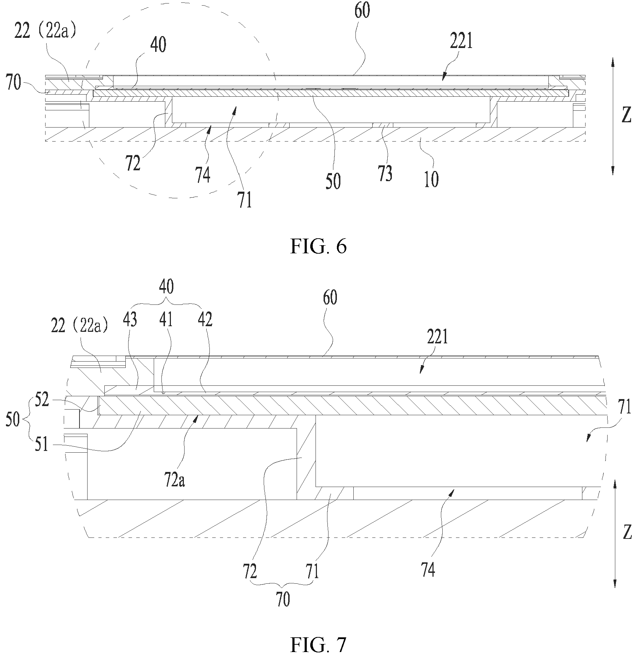

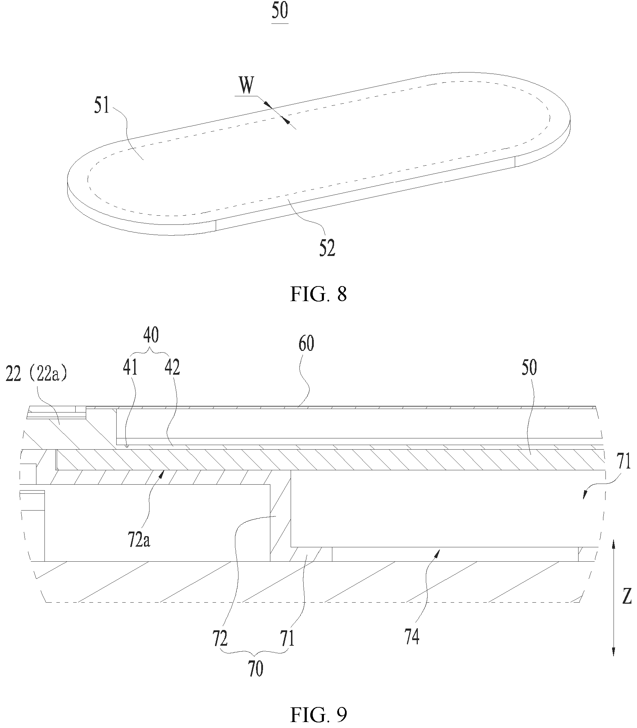

FIG. 3 is a schematic exploded view of a battery cell according to some embodiments of this application; FIG. 4 is a schematic diagram of a partial structure of a battery cell according to some embodiments of this application; FIG. 5 is a schematic cross-sectional view of a battery cell according to some embodiments of this application; FIG. 6 is a schematic enlarged view of FIG. 5 at a circled position; FIG. 7 is a schematic enlarged view of FIG. 6 at a circled position; and FIG. 8 is a schematic structural diagram of a protective member of a battery cell according to some embodiments of this application. It is noted here that dashed lines in FIG. 8 are used to show a boundary position between a first region and a second region of the protective member. In an actual protective member, the dashed lines shown in FIG. 8 do not exist.

Referring to FIG. 3 to FIG. 8, an embodiment of this application provides a battery cell 6, which includes an electrode assembly 10 and a housing 20, where the electrode assembly 10 is accommodated in the housing 20.

The housing 20 is a hollow structure, which is internally provided with an accommodating space for accommodating the electrode assembly 10 and an electrolyte. A shape of the housing 20 may be determined according to a specific shape of the electrode assembly 10. For example, if the electrode assembly 10 is a rectangular structure, a rectangular housing may be used; and if the electrode assembly 10 is a cylindrical structure, a cylindrical housing may be used.

In an example, the housing 20 includes a shell 21 and an end cover 22. The shell 21 has an opening, and the end cover 22 is configured to cover the opening.

The shell 21 fits with the end cover 22 to form an internal cavity of the battery cell 6, and the formed internal cavity can be used to accommodate the electrode assembly 10, the electrolyte, and other components.

The shell 21 and the end cover 22 may be separate components. For example, an opening may be provided on the shell 21, and the end cover 22 covers the opening to form the internal cavity of the battery cell 6.

The shell 21 may have various shapes and various sizes, such as a rectangular shape, a cylindrical shape, and a hexagonal prism shape. Specifically, the shape of the shell 21 may be determined according to a specific shape and size of the electrode assembly 10. The shell 21 may be made of various materials, such as copper, iron, aluminum, stainless steel, aluminum alloy, and plastic.

The end cover 22 may be adapted to the shell 21 in shape so as to fit with the shell 21. The end cover 22 and the shell 21 may be made of a same material or different materials. Optionally, the end cover 22 may be made of a material with specific hardness and strength (such as copper, iron, aluminum, stainless steel, aluminum alloy, and plastic), so that the end cover 22 is less likely to deform when subjected to extrusion and collision, and thus the battery cell 6 can have higher structural strength and improved reliability.

The end cover 22 is connected to the shell 21 by welding, bonding, clamping, or other methods.

The shell 21 may have one end open or two ends open. In some examples, the shell 21 may be a structure with one side open, and one end cover 22 is provided to cover the shell 21. In some other examples, the shell 21 may alternatively be a structure with two sides open, and two end covers 22 are provided, where the two end covers 22 cover the two openings of the shell 21 respectively.

For example, when the battery cell 6 is used in an upright position, the end cover 22 is located above the electrode assembly 10 in the direction of gravity. When the battery cell 6 is used in an inverted position, the end cover 22 is located below the electrode assembly 10 in the direction of gravity.

The electrode assembly 10 is a component in the battery cell 6 where electrochemical reactions take place. The shell 21 may contain one or more electrode assemblies 10.

In an example, the electrode assembly 10 includes a positive electrode sheet and a negative electrode sheet. Portions of the positive electrode sheet and the negative electrode sheet that have active materials constitute a main body of the electrode assembly 10, and portions of the positive electrode sheet and the negative electrode sheet that do not have active materials each constitute a tab 11. The tabs 11 may include a positive tab and a negative tab. The positive tab and the negative tab may be located at a same end of the main body or at two ends of the main body respectively.

In some embodiments, the end cover 22 is provided with an electrolyte injection hole 222. After the end cover 22 is assembled with the shell 21, the electrolyte can be injected into the shell 21 through the electrolyte injection hole 222. In some embodiments, the battery cell further includes a sealing member 90, where the sealing member 90 is connected to the end cover 22 and is configured to seal the electrolyte injection hole 222.

In some embodiments, the battery cell 6 further includes an electrode terminal 30 arranged on the housing 20. The electrode terminal 30 may be configured to be electrically connected to the electrode assembly 10 to output or input electrical energy of the battery cell 6.

During charging and discharging of a battery, a positive electrode active material and a negative electrode active material react with the electrolyte, and the tab is connected to the electrode terminal 30 to form a current loop.

In some embodiments, the battery cell 6 includes two electrode terminals 30, where one electrode terminal 30 is connected to the positive electrode sheet, and the other electrode terminal 30 is connected to the negative electrode sheet.

In some embodiments, the battery cell 6 further includes an adapter sheet 80, where the adapter sheet 80 connects the electrode terminal 30 and the tab 11.

In some embodiments, the battery cell 6 includes a housing 20 and a pressure relief mechanism 40, where the housing 20 includes a wall portion 20a, and the pressure relief mechanism 40 is arranged on the wall portion 20a.

In an example, the wall portion 20a may be the end cover 22 or a wall of the shell 21.

In an example, the wall portion 20a may be circular, rectangular, elliptical, or of other shapes.

In some examples, the pressure relief mechanism 40 and the wall portion 20a may be separately formed components, and they may be connected by welding, bonding, or other methods. For example, the wall portion 20a is provided with a pressure relief hole 221, the pressure relief hole 221 extends through the wall portion 20a, and the pressure relief mechanism 40 is installed on the wall portion 20a and covers the pressure relief hole 221 to separate spaces on inner and outer sides of the wall portion 20a. In an alternative embodiment, the pressure relief mechanism 40 and the wall portion 20a may alternatively be an integrally formed structure.

For example, the pressure relief mechanism 40 can actuate when an internal pressure or temperature of the battery cell 6 reaches a threshold to release substances inside the housing 20. The threshold is designed differently according to different design requirements. The threshold may depend on a material of one or more of the positive electrode, negative electrode, electrolyte, and separator in the battery cell 6.

When the internal pressure or temperature of the battery cell 6 reaches the threshold, the pressure relief mechanism 40 actuates to release gas inside the housing 20, thereby relieving the internal pressure of the battery cell 6. In an example, when the pressure relief mechanism 40 actuates, other high-temperature substances, such as particles and fragments, may also be relieved.

The internal pressure of the battery cell 6 may be an internal pressure of the housing 20, and the internal temperature of the battery cell 6 may be an internal temperature of the housing 20.

The actuation of the pressure relief mechanism 40 may be triggered by only the internal pressure of the housing 20, by only the internal temperature of the housing 20, or by both the internal pressure and internal temperature of the housing 20.

In an example, when thermal runaway occurs in the battery cell 6, as the gas inside the housing 20 continuously accumulates, the internal pressure of the housing 20 may reach or even exceed the pressure threshold. Under a condition that the internal pressure of the housing 20 reaches the threshold, the pressure relief mechanism 40 actuates and forms a pressure relief channel to enable communication between space inside the housing 20 and space outside the housing 20. The gas inside the housing 20 may be discharged through the pressure relief channel, thereby reducing the risk of explosion of the battery cell 6.

In an example, when the electrolyte reacts with an active material and quickly releases heat, the internal temperature of the housing 20 increases, and the temperature increase also causes an increase in the internal pressure of the housing 20. Under a condition that the internal temperature of the housing 20 reaches the threshold, the pressure relief mechanism 40 can actuate under the action of temperature and pressure and form a pressure relief channel to enable communication between the space inside the housing 20 and the space outside the housing 20. The gas inside the housing 20 may be discharged through the pressure relief channel, thereby reducing the risk of explosion of the battery cell 6.

In some embodiments, the electrode terminal 30 is installed on the wall portion 20a.

In some embodiments, the battery cell 6 includes an electrode assembly 10, a housing 20, a pressure relief mechanism 40, and a protective member 50. The housing 20 includes a wall portion 20a. The electrode assembly 10 is accommodated in the housing 20. The pressure relief mechanism 40 is arranged on the wall portion 20a. In a thickness direction Z of the wall portion 20a, at least part of the protective member 50 is arranged between the pressure relief mechanism 40 and the electrode assembly 10.

In the thickness direction Z of the wall portion 20a, the protective member 50 may completely separate the pressure relief mechanism 40 from the electrode assembly 10, or may separate only part of the pressure relief mechanism 40 from the electrode assembly 10.

In the thickness direction Z of the wall portion 20a, the protective member 50 and the pressure relief mechanism 40 may be spaced apart, or may be in contact with each other.

The protective member 50 may be connected to the wall portion 20a or may be separated from the wall portion 20a. The protective member 50 may be connected to the pressure relief mechanism 40, or may be separated from the pressure relief mechanism 40.

In an example, when the pressure relief mechanism 40 actuates, the protective member 50 may be ruptured, broken, opened, or thrown out, or generate other actions under the action of the internal pressure of the battery cell 6, to reduce the blocking of the protective member 50 on an internal substance of the housing 20.

In an example, the protective member 50 is accommodated in the housing 20.

When thermal runaway occurs in the battery cell 6, the internal pressure of the battery cell 6 can be transmitted to the pressure relief mechanism 40 through the protective member 50, so that the pressure relief mechanism 40 actuates in a timely manner. The pressure relief mechanism 40 actuates and releases a substance inside the housing 20 outward to reduce the risk of explosion and fire of the battery cell 6, thereby improving the reliability of the battery cell 6. When a high-temperature substance outside the battery cell 6 (such as high-temperature airflow or high-temperature particles) acts on the pressure relief mechanism 40 and melts through the pressure relief mechanism 40, the protective member 50 can withstand thermal shock of the high-temperature substance and separate at least part of the high-temperature substance from the electrode assembly 10, reducing the risk of conduction of the positive and negative electrodes of the electrode assembly 10 caused by the high-temperature substance (for example, the high-temperature substance melts through the separator of the electrode assembly 10, causing conduction of the positive and negative electrodes of the electrode assembly 10), thereby improving the reliability of the battery cell 6.

As compared with a solution in which the protective member is arranged on an outer side of the pressure relief mechanism, arranging the protective member on the inner side of the pressure relief mechanism can reduce the risk of damage to the protective member by external impurities.

In some embodiments, the pressure relief mechanism 40 includes a weakened portion 41. The weakened portion 41 is a portion of the pressure relief mechanism 40 with relatively low strength, and is a portion of the pressure relief mechanism 40 that is likely to be ruptured, broken, torn, or opened. For example, the strength of the pressure relief mechanism 40 is less than the strength of a portion of the pressure relief mechanism 40 close to the weakened portion 41.

In some examples, a groove, indentation, or other structure may be provided in a predetermined region of the pressure relief mechanism 40 to reduce the local strength of the pressure relief mechanism 40, thereby forming the weakened portion 41 on the pressure relief mechanism 40. For example, a predetermined region of the pressure relief mechanism 40 is thinned, and the thinned portion of the pressure relief mechanism 40 forms the weakened portion 41. In some other examples, a material treatment may be performed on the predetermined region of the pressure relief mechanism 40, so that the strength of this region is weaker than the strength of other regions. In other words, this region is the weakened portion 41.

The weakened portion 41 can rupture when the internal pressure or temperature of the battery cell 6 reaches a threshold to release an internal substance of the housing 20.

In some embodiments, the pressure relief mechanism 40 includes a pressure relief portion 42 surrounded by the weakened portion 41.

In some examples, the weakened portion 41 is annular, and the weakened portion 41 surrounds the entire circumference of the pressure relief portion 42. In some other examples, two ends of the weakened portion 41 are not closed. A line connecting the two ends of the weakened portion 41, together with the weakened portion 41, defines the pressure relief portion 42. For example, the weakened portion 41 is U-shaped.

After at least part of the weakened portion 41 ruptures, the pressure relief portion 42 can be flipped or thrown out under the action of the internal pressure of the battery cell 6.

In some embodiments, in the thickness direction Z, a projection of the weakened portion 41 is located within a projection of the protective member 50.

The weakened portion 41 has low strength and is more likely to be melted through by an external high-temperature substance. The protective member 50 can shield the weakened portion 41 from an inner side. Even if the weakened portion 41 is melted through by a high-temperature substance, the protective member 50 can separate the high-temperature substance from the electrode assembly 10 to some extent.

In some embodiments, in the thickness direction Z, a projection of the pressure relief portion 42 is located within the projection of the protective member 50. The protective member 50 can shield the pressure relief portion 42 from the inner side. Even if the pressure relief portion 42 is melted through by a high-temperature substance, the protective member 50 can separate the high-temperature substance from the electrode assembly 10.

For example, compared with the weakened portion 41, the pressure relief portion 42 has a larger area, causing a higher risk of an external high-temperature substance falling on the pressure relief portion 42. The protective member 50 shields the pressure relief portion 42 preferably from the inner side.

In some embodiments, the wall portion 20a is provided with a pressure relief hole 221, and the pressure relief hole 221 extends through the wall portion 20a along the thickness direction Z.

A central axis of the pressure relief hole 221 may be parallel to the thickness direction Z or may be inclined relative to the thickness direction Z.

The pressure relief hole 221 may be a round hole, a square hole, an elliptical hole, a racetrack-shaped hole, or a through hole of other shapes.

In some embodiments, the pressure relief mechanism 40 is connected to the wall portion 20a and covers the pressure relief hole 221.

In an example, the pressure relief mechanism 40 may be located on a side of the pressure relief hole 221 facing the electrode assembly 10 to cover the pressure relief hole 221 from the inner side. Alternatively, the pressure relief mechanism 40 may be located on a side of the pressure relief hole 221 facing away from the electrode assembly 10 to cover the pressure relief hole 221 from the outer side.

In an example, the pressure relief mechanism 40 and the wall portion 20a are separately formed components, and the pressure relief mechanism 40 may be connected to the wall portion 20a by welding, bonding, or other methods. Optionally, the pressure relief mechanism 40 and the wall portion 20a are connected by welding.

In some embodiments, in the thickness direction Z, a projection of the pressure relief hole 221 is located within the projection of the protective member 50.

An external high-temperature substance needs to pass through the pressure relief hole 221 before it can enter the housing 20. The protective member 50 can shield the pressure relief hole 221 from the inner side and separate, to some extent, a high-temperature substance passing through the pressure relief hole 221 from the electrode assembly 10, reducing the risk of short circuit, thereby improving the reliability of the battery cell 6.

For example, the pressure relief mechanism 40 covers the pressure relief hole 221 from the inner side. After a high-temperature substance enters the pressure relief hole 221, a portion of the pressure relief mechanism 40 corresponding to the pressure relief hole 221 withstands thermal shock of the high-temperature substance. In other words, the portion of the pressure relief mechanism 40 corresponding to the pressure relief hole 221 is more likely to be melted through. In these embodiments of this application, a projection of the pressure relief hole 221 along the thickness direction Z is located within a projection of the protective member 50 along the thickness direction Z. Even if the portion of the pressure relief mechanism 40 corresponding to the pressure relief hole 221 is melted through, the protective member 50 can shield the high-temperature substance, and separate the high-temperature substance from the electrode assembly 10, thereby improving the reliability of the battery cell 6.

In some embodiments, the battery cell 6 further includes a protective film 60, and the protective film 60 is located on an outer side of the pressure relief hole 221 and is connected to the wall portion 20a. In the thickness direction Z, the protective film 60 covers at least part of the pressure relief hole 221. The protective film 60 can close the pressure relief hole 221 to some extent, to reduce impurities falling into the pressure relief hole 221, thereby reducing the risk of the pressure relief mechanism 40 being corroded by the impurities.

In addition, the protective film 60 has a low melting point and low strength. When thermal runaway occurs in the battery cell 6, the protective film 60 is very likely to be broken by an internal substance of the battery cell 6, and thus has little impact on the pressure relief of the battery cell 6.

In some embodiments, the pressure relief mechanism 40 includes a connecting portion 43, and the weakened portion 41 connects the pressure relief portion 42 and the connecting portion 43. The connecting portion 43 may be connected to the wall portion 20a. For example, the connecting portion 43 is welded to the wall portion 20a.

In some embodiments, in the thickness direction Z, a projection of the pressure relief mechanism 40 is located within the projection of the protective member 50, reducing the risk of short circuit, thereby improving the reliability of the battery cell 6.

In some embodiments, the protective member 50 includes a first region 51 and a second region 52 surrounding the first region 51. The first region 51 and the pressure relief mechanism 40 entirely overlap in the thickness direction Z. A width W of the second region 52 is 0.5 mm to 10 mm.

Optionally, W is 0.5 mm, 0.8 mm, 1.0 mm, 1.5 mm, 2.0 mm, 2.5 mm, 3.0 mm, 4.0 mm, 5.0 mm, 6.0 mm, 7.0 mm, 8.0 mm, 9.0 mm, or 10 mm.

Defining W to be greater than or equal to 0.5 mm can reduce the risk that the protective member 50 does not cover the entire pressure relief mechanism 40 due to assembly errors. Defining W to be less than or equal to 10 mm can reduce the resistance of the protective member 50 coming out of the housing 20 when the pressure relief mechanism 40 actuates, and reduce the blocking of the protective member 50 on an internal substance, thereby improving the pressure relief efficiency.

In some embodiments, a thickness of the protective member 50 is greater than a thickness of the pressure relief mechanism 40 to reduce the risk of the protective member 50 being melted through by a high-temperature substance, thereby improving the reliability of the battery cell 6.

Optionally, the thickness of the protective member 50 is 1.5 times to 10 times the thickness of the pressure relief portion 42.

In some embodiments, the thickness of the protective member 50 is 0.4 mm to 2 mm.

For example, the thickness of the protective member 50 is 0.4 mm, 0.5 mm, 0.6 mm, 0.7 mm, 0.8 mm, 1 mm, 1.2 mm, 1.4 mm, 1.5 mm, 1.6 mm, 1.8 mm, or 2 mm.

Defining the thickness of the protective member 50 to be greater than or equal to 0.4 mm can reduce the risk of the protective member 50 being melted through by a high-temperature substance, thereby improving the reliability of the battery cell 6. Defining the thickness of the protective member 50 to be less than or equal to 2 mm can reduce the difficulty of deformation of the protective member 50 when the pressure relief mechanism 40 actuates, so that the protective member 50 can come out of the housing 20 in a timely manner, reducing the blocking of the protective member 50 on an internal substance, thereby improving the pressure relief efficiency.

In some embodiments, the thickness of the protective member 50 is 0.5 mm to 1.5 mm.

In some embodiments, a melting point of the protective member 50 is greater than or equal to 250°C.

The melting point of the protective member 50 refers to the melting point of the protective member 50 under atmospheric pressure. Optionally, the melting point of the protective member 50 may be 250°C, 300°C, 500°C, 700°C, 900°C, 1000°C, 1500°C, 2000°C, or 2500°C.

The protective member 50 has a melting point greater than or equal to 250°C, and therefore can withstand high thermal shock. Under a condition that a high-temperature substance melts through the pressure relief mechanism 40 and comes into contact with the protective member 50, the protective member 50 can withstand thermal shock of the high-temperature substance and is not prone to problems such as deformation and melting through under a high temperature, so that at least part of the high-temperature substance is separated from the electrode assembly 10, thereby reducing the risk of short circuit.

In some embodiments, the melting point of the protective member 50 is greater than or equal to 300°C.

In some embodiments, an elastic modulus of the protective member 50 is less than or equal to 4500 MPa. For example, the elastic modulus may refer to Young's modulus.

In an example, the elastic modulus of the protective member 50 may be tested in accordance with the national standard GB/T 1040.1-2018 Plastics-Determination of Tensile Properties.

Optionally, the elastic modulus of the protective member 50 may be 4500 MPa, 4000 MPa, 3500 MPa, 3000 MPa, 2500 MPa, 2000 MPa, 1000 MPa, or 500 MPa.

The elastic modulus of the protective member 50 is small. When thermal runaway occurs in the battery cell 6, the protective member 50 can be in close contact with the pressure relief mechanism 40 under the internal pressure of the battery cell 6, to transmit the internal pressure of the battery cell 6 to the pressure relief mechanism 40, enabling the pressure relief mechanism 40 to actuate in a timely manner. When the pressure relief mechanism 40 actuates, the protective member 50 may alternatively deform and come out of the housing 20, reducing the blocking of the protective member 50 on an internal substance, thereby improving the pressure relief efficiency.

In some embodiments, the elastic modulus of the protective member 50 is less than or equal to 4000 MPa.

In some embodiments, the protective member 50 is made of polyimide or polyethylene terephthalate. These materials have high melting points and are less likely to be melted through, and these materials are less likely to be corroded by electrolytes.

In some embodiments, the battery cell 6 further includes an insulating member 70. The insulating member 70 is arranged between the wall portion 20a and the electrode assembly 10. The insulating member 70 is connected to the wall portion 20a and abuts against the electrode assembly 10.

The insulating member 70 can separate the electrode assembly 10 from the wall portion 20a to reduce the risk of conduction of the positive and negative electrodes of the electrode assembly 10 caused by the wall portion 20a, thereby improving the reliability of the battery cell 6. When the battery cell 6 is subjected to external impact, the insulating member 70 can restrict the shaking of the electrode assembly 10 within the housing 20, reducing the risk of connection failure between the electrode assembly 10 and other components, thereby improving the reliability of the battery cell 6.

In some embodiments, the insulating member 70 is made of plastic.

In some embodiments, the insulating member 70 may be bonded to the wall portion 20a.

In some embodiments, in the thickness direction Z, the insulating member 70 abuts against the electrode assembly 10.

In some embodiments, in the thickness direction Z, the protective member 50 is arranged between the insulating member 70 and the pressure relief mechanism 40. The insulating member 70 can provide support for the protective member 50.

In some embodiments, the protective member 50 is connected to the insulating member 70.

For example, the protective member 50 may be connected to the insulating member 70 by bonding, clamping, welding, or other methods.

The insulating member 70 can limit the protective member 50 to reduce the risk of deviation of the protective member 50 within the housing 20, so that the protective member 50 can cover the pressure relief mechanism 40 from the inner side and shield a high-temperature substance that melts through the pressure relief mechanism 40.

In some embodiments, the protective member 50 is bonded to the insulating member 70. When thermal runaway occurs in the battery cell 6, a bonding region between the protective member 50 and the insulating member 70 is torn under the action of the internal pressure and temperature of the battery cell 6, causing the protective member 50 to detach from the insulating member 70, thereby reducing the blocking of the protective member 50 on an internal substance of the battery cell 6.

Optionally, the protective member 50 is bonded to the insulating member 70 through an electrolyte-corrosion-resistant adhesive layer.

Optionally, a side of the protective member 50 facing away from the pressure relief mechanism 40 has a connecting surface, and at least part of the connecting surface is bonded to the insulating member 70 through an adhesive layer.

In some embodiments, a side of the insulating member 70 facing the wall portion 20a is provided with a recess 71. At least part of the protective member 50 is accommodated in the recess 71.

The protective member 50 may be entirely accommodated in the recess 71 or only partially accommodated in the recess 71.

By providing the recess 71, the insulating member 70 and the protective member 50 can share space in the thickness direction Z, thereby increasing the space utilization rate. During assembly of the insulating member 70 and the protective member 50, the recess 71 can position the protective member 50, thereby simplifying the assembly process.

Optionally, upon the provision of the recess 71, the recess 71 can limit the protective member 50, and the protective member 50 may be fixed to the insulating member 70 without using a method of bonding, that is, the protective member 50 can be directly placed into the recess 71.

In some embodiments, the protective member 50 is entirely accommodated in the recess 71. In the thickness direction Z, the protective member 50 does not protrude from a surface of the insulating member 70 facing the wall portion 20a, thereby reducing the risk that the protective member 50 interferes with the close contact between the insulating member 70 and the wall portion 20a.

In some embodiments, a side wall 72 of the recess has a step surface 72a, and the protective member 50 abuts against and is connected to the step surface 72a.

The step surface 72a can support the protective member 50 and separate a bottom wall 73 of the recess from the protective member 50, to form a heat insulation cavity between the bottom wall 73 of the recess and the protective member 50, and the heat insulation cavity can reduce heat transferred to the bottom wall 73 of the recess, so that heat conducted to the electrode assembly 10 is reduced, thereby reducing the risk of short circuit of the electrode assembly 10. The provision of the step surface 72a can reduce a connection area between the protective member 50 and the insulating member 70, thereby reducing the difficulty of separating the protective member 50 from the insulating member 70 when thermal runaway occurs in the battery cell 6.

In some embodiments, the bottom wall 73 of the recess abuts against the electrode assembly 10 along the thickness direction Z.

In some embodiments, the protective member 50 is bonded to the step surface 72a.

In some embodiments, the insulating member 70 is provided with a through hole 74, and the through hole 74 is located on the side of the protective member 50 facing away from the pressure relief mechanism 40.

The through hole 74 is in communication with space between the insulating member 70 and the electrode assembly 10. When thermal runaway occurs in the battery cell 6, a substance generated by the electrode assembly 10 can act on the protective member 50 through the through hole 74 and apply a pressure to the pressure relief mechanism 40 through the protective member 50, so that the pressure relief mechanism 40 actuates in a timely manner and forms a pressure relief channel. The substance generated by the electrode assembly 10 can be quickly discharged to the outside of the battery cell 6 through the through hole 74 and the pressure relief channel.

In some embodiments, the bottom wall 73 of the recess is provided with a through hole 74.

In some embodiments, the side wall 72 of the recess is provided with a through hole 74. For example, the through hole 74 is provided on the step surface 72a.

In some embodiments, the melting point of the protective member 50 is greater than a melting point of the insulating member 70. The melting point of the protective member 50 is relatively higher. Under a condition that a high-temperature substance melts through the pressure relief mechanism 40, the protective member 50 can withstand thermal shock of the high-temperature substance and is less likely to be melted through, so that at least part of the high-temperature substance is separated from the electrode assembly 10, thereby reducing the risk of short circuit.

In some embodiments, in the thickness direction Z, the protective member 50 may be in contact with the wall portion 20a or may not be in contact with the wall portion 20a. Optionally, in the thickness direction Z, the protective member 50 is spaced apart from the wall portion 20a. When thermal runaway occurs in the battery cell 6, constraint of the wall portion 20a on the protective member 50 can be reduced, so that the protective member 50 and the insulating member 70 are quickly separated.

In some embodiments, a specific heat capacity of the insulating member 70 is greater than or equal to 1600 J/(kg×°C).

Optionally, the specific heat capacity of the insulating member 70 is 1600 J/(kg×°C), 1800 J/(kg×°C), 2000 J/(kg×°C), 2200 J/(kg×°C), 2400 J/(kg×°C), 2500 J/(kg×°C), 2600 J/(kg×°C), 2800 J/(kg×°C), or 3000 J/(kg×°C).

The insulating member 70 has a high specific heat capacity and can absorb a large amount of heat. When an external high-temperature substance melts through the pressure relief mechanism 40 and is attached to the protective member 50, the insulating member 70 can absorb heat of the high-temperature substance through the protective member 50, reducing a temperature rise of the protective member 50, and reducing the risk of the protective member 50 being melted through, thereby improving the reliability of the battery cell 6.

In some embodiments, the specific heat capacity of the insulating member 70 is greater than or equal to 2000 J/(kg×°C).

In some embodiments, the wall portion 20a is the end cover 22. In some other alternative embodiments, the shell 21 includes the wall portion 20a, and the wall portion 20a faces the end cover 22, that is, the wall portion 20a may be a bottom wall of the shell 21.

In some embodiments, the protective member 50 is in a flat plate shape. Optionally, the protective member 50 is uniform in thickness.

FIG. 9 is a schematic partial cross-sectional view of a battery cell according to some other embodiments of this application.

As shown in FIG. 9, in some embodiments, the wall portion 20a and the pressure relief mechanism 40 are integrally formed. The pressure relief mechanism 40 includes a weakened portion 41 and a pressure relief portion 42.

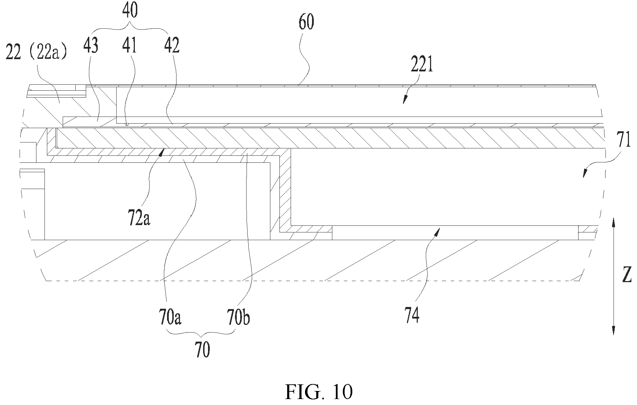

FIG. 10 is a schematic partial cross-sectional view of a battery cell according to still some other embodiments of this application.

Referring to FIG. 10, in some embodiments, the insulating member 70 includes an insulating substrate 70a and a coating 70b arranged on a surface of the insulating substrate 70a. A specific heat capacity of the coating 70b is greater than a specific heat capacity of the insulating substrate 70a. In the thickness direction Z, a projection of the coating 70b and the projection of the pressure relief mechanism 40 at least partially overlap.

The coating 70b may cover the entire insulating substrate 70a or may cover only part of the insulating substrate 70a.

The coating 70b and the protective member 50 can provide double-layer protection. After the pressure relief mechanism 40 is melted through by an external high-temperature substance, even if the high-temperature substance falls onto the coating 70b, the coating 70b can quickly absorb heat. The coating 70b has a high specific heat capacity, so that the coating 70b has a small temperature rise and therefore is less likely to be melted through.

In some embodiments, the protective member 50 is connected to the coating 70b. Under a condition that an external high-temperature substance falls onto the protective member 50, the coating 70b can absorb heat of the protective member 50, reducing a temperature rise of the protective member 50, thereby reducing the risk of the protective member 50 being melted through.

In some embodiments, a melting point of the coating 70b is greater than a melting point of the insulating substrate 70a. The coating 70b has a higher melting point and is less likely to be melted through, so that a high-temperature substance is separated from the electrode assembly 10, thereby improving the reliability.

An embodiment of this application further provides a battery, which includes a plurality of battery cells 6 provided in any of the foregoing embodiments.

According to some embodiments of this application, this application further provides an electric apparatus, including the battery of any of the above embodiments, where the battery is configured to provide electrical energy for the electric apparatus. The electric apparatus may be any of the foregoing devices or systems that use a battery.

Referring to FIG. 3 to FIG. 8, an embodiment of this application provides a battery cell 6, which includes an electrode assembly 10, a housing 20, a pressure relief mechanism 40, a protective member 50, and an insulating member 70.

The housing 20 includes a shell 21 and an end cover 22. The shell 21 has an opening, and the end cover 22 is configured to cover the opening. The shell 21 fits with the end cover 22 to form an internal cavity, and the electrode assembly 10 is accommodated in the internal cavity. The end cover 22 is provided with a pressure relief hole 221, and the pressure relief hole 221 extends through the end cover 22 along a thickness direction Z of the end cover 22. The pressure relief mechanism 40 is located on a side of the pressure relief hole 221 close to the electrode assembly 10. In the thickness direction Z, the pressure relief mechanism 40 covers the pressure relief hole 221 from an inner side.

The insulating member 70 is arranged between the wall portion 20a and the electrode assembly 10. The insulating member 70 is connected to the wall portion 20a and abuts against the electrode assembly 10. A side of the insulating member 70 facing the wall portion 20a is provided with a recess 71.

The protective member 50 is accommodated in the recess 71 and is connected to the insulating member 70. In the thickness direction Z, a projection of the pressure relief mechanism 40 is located within a projection of the protective member 50.

A melting point of the protective member 50 is greater than or equal to 250°C. A thickness of the protective member 50 is greater than a thickness of the pressure relief mechanism 40.

Although this application has been described with reference to preferred embodiments, various modifications can be made without departing from the scope of this application, and components therein can be replaced with equivalents. Especially, as long as there is no structural conflict, the technical features mentioned in the embodiments can be combined in any manner. This application is not limited to the specific embodiments disclosed herein but includes all technical solutions falling within the scope of the claims.

## Claims

1. A battery cell, comprising:
a housing, comprising a wall portion;
an electrode assembly, accommodated in the housing;
a pressure relief mechanism, arranged on the wall portion; and
a protective member, wherein in a thickness direction of the wall portion, at least part of the protective member is arranged between the pressure relief mechanism and the electrode assembly.

2. The battery cell according to claim 1, wherein the pressure relief mechanism comprises a weakened portion and a pressure relief portion surrounded by the weakened portion; and
in the thickness direction, a projection of the pressure relief portion is located within a projection of the protective member, and a projection of the weakened portion is located within the projection of the protective member.

3. The battery cell according to claim 1 or 2, wherein the wall portion is provided with a pressure relief hole, the pressure relief hole extends through the wall portion along the thickness direction, and the pressure relief mechanism is connected to the wall portion and covers the pressure relief hole; and
in the thickness direction, a projection of the pressure relief hole is located within a projection of the protective member.

4. The battery cell according to any one of claims 1 to 3, wherein in the thickness direction, a projection of the pressure relief mechanism is located within a projection of the protective member.

5. The battery cell according to claim 4, wherein the protective member comprises a first region and a second region surrounding the first region, and the first region and the pressure relief mechanism entirely overlap in the thickness direction; and
a width of the second region is 0.5 mm to 10 mm.

6. The battery cell according to any one of claims 1 to 5, wherein a thickness of the protective member is greater than a thickness of the pressure relief mechanism.

7. The battery cell according to any one of claims 1 to 6, wherein a thickness of the protective member is 0.4 mm to 2 mm; and optionally, the thickness of the protective member is 0.5 mm to 1.5 mm.

8. The battery cell according to any one of claims 1 to 7, wherein a melting point of the protective member is greater than or equal to 250°C; and optionally, the melting point of the protective member is greater than or equal to 300°C.

9. The battery cell according to any one of claims 1 to 8, wherein an elastic modulus of the protective member is less than or equal to 4500 MPa; and optionally, the elastic modulus of the protective member is less than or equal to 4000 MPa.

10. The battery cell according to any one of claims 1 to 9, wherein the protective member is made of polyimide or polyethylene terephthalate.

11. The battery cell according to any one of claims 1 to 10, further comprising an insulating member, wherein the insulating member is arranged between the wall portion and the electrode assembly, and the insulating member is connected to the wall portion and abuts against the electrode assembly; and
in the thickness direction, the protective member is arranged between the insulating member and the pressure relief mechanism.

12. The battery cell according to claim 11, wherein the protective member is connected to the insulating member.

13. The battery cell according to claim 11 or 12, wherein a side of the insulating member facing the wall portion is provided with a recess; and
at least part of the protective member is accommodated in the recess.

14. The battery cell according to claim 13, wherein the protective member is entirely accommodated in the recess.

15. The battery cell according to claim 13 or 14, wherein a side wall of the recess has a step surface, and the protective member abuts against and is connected to the step surface.

16. The battery cell according to any one of claims 11 to 15, wherein the insulating member is provided with a through hole, and the through hole is located on a side of the protective member facing away from the pressure relief mechanism.

17. The battery cell according to any one of claims 11 to 16, wherein a melting point of the protective member is greater than a melting point of the insulating member.

18. The battery cell according to any one of claims 11 to 17, wherein a specific heat capacity of the insulating member is greater than or equal to 1600 J/(kg×°C); and optionally, the specific heat capacity of the insulating member is greater than or equal to 2000 J/(kg×°C).

19. The battery cell according to any one of claims 11 to 18, wherein the insulating member comprises an insulating substrate and a coating arranged on a surface of the insulating substrate, and a specific heat capacity of the coating is greater than a specific heat capacity of the insulating substrate; and
in the thickness direction, a projection of the coating and a projection of the pressure relief mechanism at least partially overlap.

20. The battery cell according to claim 19, wherein the protective member is connected to the coating.

21. The battery cell according to claim 19 or 20, wherein a melting point of the coating is greater than a melting point of the insulating substrate.

22. A battery, comprising a plurality of the battery cells according to any one of claims 1 to 21.

23. An electric apparatus, comprising the battery according to claim 22, wherein the battery is configured to provide electrical energy.
